# EUROPÄISCHE PATENTSCHRIFT

(11) **EP 0 793 802 B1**
(45) Veröffentlichungstag und Bekanntmachung des Hinweises auf die Patenterteilung: **10.04.2002**
(21) Anmeldenummer: 95936454.8
(22) Anmeldetag: 07.10.1995
(51) Int. Cl.: G01M 3/20

(54) **LECKSUCHGERÄT MIT VAKUUMPUMPEN UND BETRIEBSVERFAHREN DAZU**
LEAK-DETECTOR WITH VACUUM PUMPS AND OPERATING METHOD THEREFOR
DISPOSITIF DE DETECTION DE FUITES POURVU DE POMPES A VIDE ET PROCEDE PERMETTANT SON FONCTIONNEMENT

(30) Priorität: 26.11.1994 DE 4442174
(43) Veröffentlichungstag der Anmeldung: 10.09.1997
(73) Patentinhaber: Leybold Vakuum GmbH, 50968 Köln (DE)
(72) Erfinder: BÖHM, Thomas, D-50859 Köln (DE)
(74) Vertreter: Leineweber, Jürgen, Dipl.-Phys.
(86) Internationale Anmeldenummer: EP9503960
(87) Internationale Veröffentlichungsnummer: WO9617237

(56) Entgegenhaltungen:
- EP-A- 0 283 543
- US-A- 4 893 497

## Beschreibung

Die Erfindung bezieht sich auf ein Lecksuchgerät mit einer als Reibungsvakuumpumpe ausgebildeten Hochvakuumpumpe und zwei weiteren gegen den Atmosphärendruck arbeitenden Vakuumpumpen. Außerdem betrifft die Erfindung ein Verfahren zum Betrieb eines Lecksuchgerätes dieser Art.

Ein Lecksuchgerät dieser Art ist aus der EU-A-283543. Es arbeitet nach dem Gegenstromprinzip (mit Helium als Testgas) und ermöglicht die Feststellung der Dichtheit eines Prüflings bzw. deren Undichtheit, und zwar von grob undicht bis zu extrem kleinen Lecks (Leckraten bis zu 10⁻¹⁰mbar l/s). Bei der Helium-Lecksuche mit einem Gerät der vorbekannten Art besteht die Gefahr von Kohlenwasserstoff-Kontaminationen im Bereich des Prüflings und/oder der Prüfkammer. Diese werden verursacht von Molekülen, die aus den Schöpfräumen der ölgedichteten, gegen Atmosphärendruck arbeitenden Vakuumpumpen stammen und entgegen der Förderrichtung der Vakuumpumpen bis in den Hochvakuumbereich zurückdiffundieren. Das gleiche Problem besteht bei Lecksuch geräten, die nach dem Teil- oder Hauptstromprinzip arbeiten, wie sie beispielsweise aus der GB-A-2 190 204 oder DE-A-2 713 580 bekannt sind.

Der Erfindung liegt die Aufgabe zugrunde, Kohlenwasserstoff-Verunreinigungen im Bereich des Prüflings und/oder der Prüfkammer zu vermeiden.

Erfindungsgemäß wird diese Aufgabe dadurch gelöst, daß beide weiteren Vakuumpumpen trocken verdichtende Vakuumpumpen sind. Trocken verdichtende Vakuumpumpen sind Pumpen, die ohne dichtendes Öl in ihrem Schöpfraum arbeiten. Zu Pumpen dieser Art gehören Membranvakuumpumpen oder nach dem Spiralprinzip arbeitende Vakuumpumpen (Schneckenpumpen), wie sie beispielsweise aus der DE-A-28 31 179 bekannt sind.

Zweckmäßig mündet im Einlaßbereich einer oder beider trokkenverdichtender Vakuumpumpen eine Spülgasleitung, über die während oder zwischen den Meßzeiten Spülgas (z.B. Luft) zugeführt werden kann. Dadurch können trotz Verwendung trocken verdichtender Vakuumpumpen die Ansprechzeit des Lecksuchers klein und seine Nachweisempfindlichkeit hoch gehalten werden. Ohne Spülgaseinlaß würde der Ersatz ölgedichteter, gegen Atmosphärendruck arbeitender Vakuumpumpen durch trocken verdichtende Vakuumpumpen eine Verlängerung der Ansprechzeit und eine Verschlechterung der Nachweisempfindlichkeit des Lecksuchers zur Folge haben. Trocken verdichtende Vorvakuumpumpen der erwähnten Art haben nämlich die Eigenschaft, daß ihr Saugvermögen in der Nähe ihres relativ hohen Enddruckes ein gegen Null gehendes Saugvermögen haben. Damit verlängert sich die Ansprechzeit. Außerdem führt diese Eigenschaft dazu, daß sich in der Pumpe ein aus Leckagen stammender Heliumuntergrund aufbaut, der die Nachweisempfindlichkeit verschlechtert.

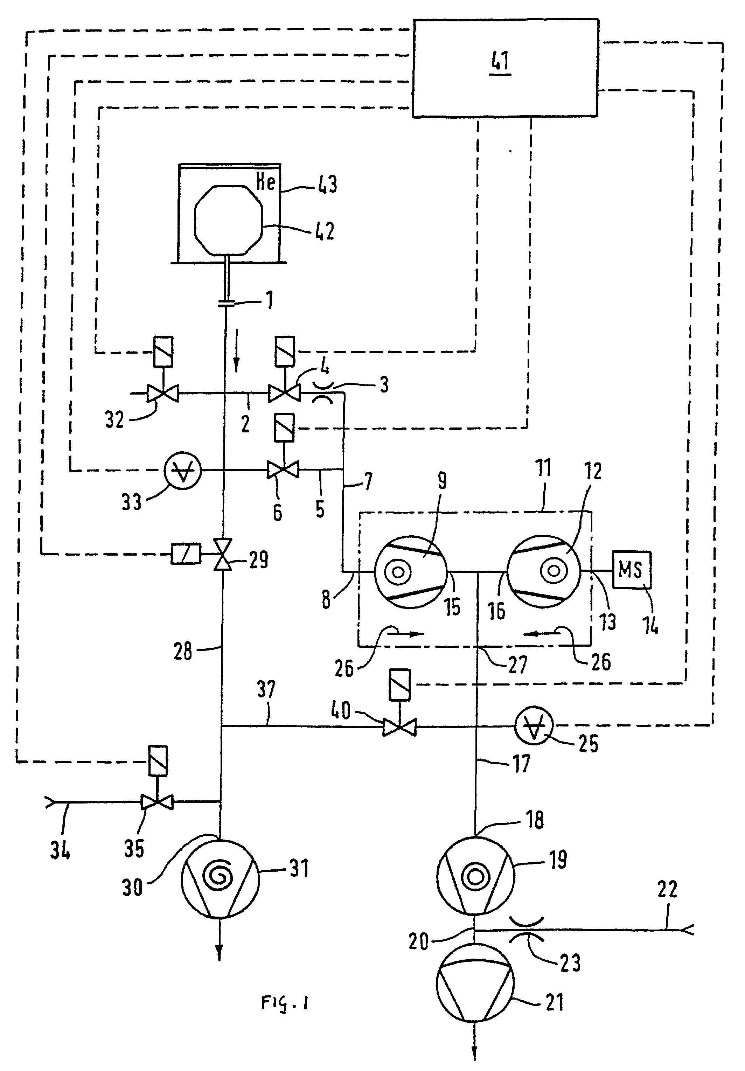

Weitere Vorteile und Einzelheiten der Erfindung sollen anhand eines in der Figur dargestellten Ausführungsbeispiels erläutert werden.

Die Figur zeigt schematisch ein Lecksuchgerät, dessen Einlaß mit 1 bezeichnet ist. Der Einlaß 1 ist über die parallel zueinander geführten Leitungsabschnitte 2 (mit Drossel 3 und Ventil 4) und 5 (mit Ventil 6) sowie die Leitung 7 mit der Eintrittsseite 8 einer Hochvakuumpumpstufe 9 verbunden.

Die Hochvakuumpumpstufe 9 ist eine Stufe einer Reibungsvakuumpumpe, zweckmäßig einer zweistufigen Turbomolekularpumpe 11, deren zweite Stufe mit 12 bezeichnet ist. An die Eintrittsseite 13 der zweiten Stufe 12 ist ein Testgas-Detektor, vorzugsweise ein Massenspektrometer 14, angeschlossen. Die beiden Austrittsseiten 15 und 16 der Hochvakuumpumpstufen 9 und 12 sind gemeinsam über die Leitung 17 mit der Eintrittsseite 18 einer Reibungspumpe 19, vorzugsweise eine Turbomolekularpumpe, verbunden. Druckseitig ist an die Turbomolekularpumpe 19 über die Verbindungsleitung 20 eine Membranpumpe 21 angeschlossen, die gegen Atmosphärendruck arbeitet. In die Leitung 20 mündet eine Spülgaszuführungsleitung 22 mit der Drossel 23. An die Leitung 17 ist außerdem noch die Druckmeßstelle 25 angeschlossen.

Die beiden Turbomolekularpumpstufen 9 und 12 sind auf einer gemeinsamen Welle angeordnet. Die Anschlüsse B und 13 befinden sich im Bereich der äußeren Stirnseiten der Turbomolekularpumpe 11. Die beiden Pumpstufen 9 und 12 sind während des Betriebs von außen nach innen (Pfeile 26) durchströmt, so daß nur ein Vorvakuumanschluß 27 vorhanden ist.

Der Einlaß 1 des Lecksuchgerätes ist außerdem über die Leitung 28 mit dem Ventil 29 mit der Eintrittsseite 30 einer zweiten Vakuumpumpe 31 verbunden. Bei dieser Pumpe 31 handelt es sich um eine nach dem Spiralprinzip arbeitenden Vakuumpumpe. An die Leitung 28 sind außerdem noch das Belüftungsventil 32 und die Druckmeßstelle 33 angeschlossen. Zwischen Ventil 29 und Eintritt 30 der Vakuumpumpe 31 steht die Leitung 28 schließlich noch mit einer Spülgaszuführungsleitung 34 mit dem Ventil 35 in Verbindung.

Die Eintrittsseiten 18 und 30 der beiden Vakuumpumpen 19 und 31 sind über die Leitung 37 miteinander verbunden. Diese ist mit einem Stellventil 40 ausgerüstet.

Zur Automatisierung des Ablaufs der Lecksuche ist eine zentrale Steuerung 41 vorgesehen, die über im einzelnen nicht mit Bezugszeichen versehene Steuerleitungen unter anderem mit den Stellventilen sowie mit den Druckmeßstellen verbunden sind.

Bei der Durchführung der Lecksuche mit dem dargestellten Lecksuchgerät wird folgendermaßen verfahren: Zunächst wird bei geschlossenen Ventilen 4, 6, 29, 35, 40 das Lecksuchgerät in seinen betriebsbereiten Zustand versetzt, indem zunächst die Vakuumpumpen 19,20 sowie 31 und danach die Turbomolekularpumpe 11 eingeschaltet werden. Das Gerät ist betriebsbereit, wenn der Druck im Massenspektrometer 14 kleiner als 10⁻⁴ mbar ist bzw. wenn die Drehzahl der Turbomolekularpumpe 11 ihren Sollwert erreicht hat und wenn der Vorvakuumdruck (Meßgerät 25) kleiner ist als der maximal zulässige Druck (z.B. 0,1 mbar).

Der zu untersuchende Prüfling 42, der sich in der Prüfkammer 43 befindet, wird an den Einlaß 1 des Lecksuchgerätes angeschlossen. In der Prüfkammer 43 befindet sich Testgas, vorzugsweise Helium, das während der Lecksuche in den Prüfling eindringt, falls dieser leck ist. Auf die Prüfkammer 43 kann verzichtet werden, wenn der Prüfling 42 mit Helium besprüht wird. Bei einer weiteren Alternative ist der Prüfling 42 selbst mit Helium gefüllt. In diesem Fall ist die Kammer 43 an den Einlaß 1 angeschlossen.

Zur Einleitung der Lecksuche werden das gegebenenfalls noch geöffnete Belüftungsventil 32 geschlossen und das in der Leitung 28 befindliche Ventil 29 geöffnet. Dadurch wird die Verbindung des Prüflings 42 mit der Vakuumpumpe 31 hergestellt, so daß der Prüfling evakuiert wird.

Ist der Prüfling nicht grob undicht, wird der Druck im Inneren des Prüflings, registriert durch die Druckmeßstelle 33, relativ schnell sinken. Hat er einen Wert von etwa 100 mbar erreicht, wird das Ventil 4 geöffnet, so daß die Hochvakuumpumpstufe 9 über die Drossel 3 mit der Leitung 28 bzw. mit dem Einlaß 1 und damit mit dem Prüfling 42 verbunden ist. Dringt während der weiteren Evakuierung bis etwa auf einen Druck von 0,1 mbar Helium in den Prüfling 42 ein, dann gelangt dieses über die Drossel 3 und die beiden Hochvakuumpumpstufen 9 und 12 zum Massenspektrometer 14. Die Lecksuche kann in diesem Fall abgebrochen werden. Lecks mit Leckraten in der Größenordnung von etwa 10 bis 10⁻⁵ mbar l/s sind während dieser Lecksuchphase feststellbar.

Ist während dieser Phase Helium noch nicht vom Massenspektrometer 14 registriert worden, beginnt eine weitere Lecksuche mit noch höherer Empfindlichkeit, indem die Verbindung zur Hochvakuumpumpstufe 9 ungedrosselt freigegeben wird. Dazu werden bei einem Druck von etwa 0,1 mbar im Prüfling 42 das Ventil 29 geschlossen und die Ventile 6 und 40 geöffnet. Die Evakuierung des Prüflings erfolgt dadurch über die Hochvakuumpumpstufe 9 und alle Pumpen 19, 21 und 31. Gegebenenfalls mitgefördertes Helium gelangt durch die Turbomolekularpumpstufe 12 zum Massensprektrometer 14. Lecks mit Leckraten von etwa 10⁻³ bis 10⁻¹⁰ mbar l/s sind in dieser Lecksuchphase feststellbar.

Ist der Prüfling nach wie vor dicht, dann wird sein Innendruck weiter sinken. Sinkt der Druck auf etwa 2.10⁻² mbar (Meßgerät 33), dann kann eine noch empfindlichere Lecksuchphase begonnen werden, indem das Ventil 40 geschlossen wird. Das Saugvermögen des Vorvakuumpumpsystems nimmt dadurch stark ab, so daß die Lecksuche entsprechend empfindlicher wird. Wird auch in dieser Phase Helium vom Massenspektrometer 14 nicht registriert, dann kann der Prüfling 42 als dicht bezeichnet werden.

Die Vakuumpumpe 21 ist eine Membranpumpe. Um den erforderlichen Vorvakuumdruck für die Turbomolekularpumpe 11 erzeugen zu können ist ihr eine Turbomolekularpumpe 19 vorgeschaltet. Das Saugvermögen der Turbomolekularpumpe ist derart gedrosselt, daß eine hohe Nachweisempfindlichkeit erzielt werden kann. Um das Problem des Heliumuntergrunds und der schlechten Ansprechzeit zu lösen, wird dauernd ein Gasstrom über die Drossel 23 (z.B. 50 Blende) in die Zwischenleitung 20 eingelassen. Dieser reißt in die Zwischenleitung 20 gelangende Heliumatome ständig mit, so daß sich ein unerwünschter Heliumuntergrund nicht aufbauen kann.

Um den Heliumuntergrund in der Spiralpumpe 31 abzubauen, muß relativ viel Gas gepumpt werden. Daher steigt bei geöffnetem Ventil 35 der Druck so stark an, daß ein Meßbetrieb gleichzeitig nicht möglich ist. Daher wird das Ventil 35 erst dann automatisch geöffnet, wenn mindestens die Ventile 29,39,40 oder aber alle Ventile - bis auf Ventil 35 - geschlossen sind.

## Patentansprüche

1. Lecksuchgerät mit einer als Reibungsvakuumpumpe (11) ausgebildeten Hochvakuumpumpe und zwei weiteren gegen den Atmosphärendruck arbeitenden Vakuumpumpen (21, 31), **dadurch gekennzeichnet, daß** beide weiteren Vakuumpumpen (21, 31) trocken verdichtende Vakuumpumpen sind.

2. Lecksuchgerät nach Anspruch 1, **dadurch gekennzeichnet, daß** die trocken verdichtenden Vakuumpumpen Spiralpumpen (31) und/oder Membranpumpen (21) sind.

3. Lecksuchgerät nach Anspruch 1 oder 2, **dadurch gekennzeichnet, daß** die erste der beiden trocken verdichtenden Vakuumpumpen (21, 31), welche mit dem Vorvakuumanschluß (27) der Reibungsvakuumpumpe (11) in Verbindung steht, als Membranpumpe (21) ausgebildet ist.

4. Lecksuchgerät nach Anspruch 3, **dadurch gekennzeichnet, daß** sich zwischen der Membranpumpe (21) und der Reibungsvakuumpumpe (11) eine Turbomolekularpumpe (19) befindet.

5. Lecksuchgerät nach Anspruch 4, **dadurch gekennzeichnet, daß** das Saugvermögen der Turbomolekularpumpe (19) zur Verbesserung der Nachweisempfindlichkeit gedrosselt ist.

6. Lecksuchgerät nach Anspruch 3, 4 oder 5, **dadurch gekennzeichnet, daß** im Bereich des Einlaßes der Membranpumpe (21) eine Spülgaszuführungsleitung (22) mündet.

7. Lecksuchgerät nach Anspruch 6, **dadurch gekennzeichnet, daß** sich in der Spülgaszuführungsleitung (22) eine Drossel (23) befindet.

8. Lecksuchgerät nach einem der Ansprüche 1 bis 7, **dadurch gekennzeichnet, daß** die zweite der beiden trocken verdichtenden Vakuumpumpen (21, 31), welche über eine Leitung (23) mit dem Ventil (24) unmittelbar mit dem Einlaß des Lecksuchgerätes (1) in Verbindung steht, als Spiralpumpe (31) ausgebildet ist.

9. Lecksuchgerät nach Anspruch 8, **dadurch gekennzeichnet**, im Bereich des Einlasses der Spiralpumpe (31) eine Spülgaszuführungsleitung mündet.

10. Lecksuchgerät nach Anspruch 4 und Anspruch 8 oder 9, **dadurch gekennzeichnet, dass** die Eintrittsseiten (18, 30) der beiden Vakuumpumpen (19, 31) über eine Leitung (37) miteinander verbunden sind, die mit einem Ventil (40) ausgerüstet ist.

11. Verfahren zum Betrieb eines Lecksuchgerätes mit einer als Reibungsvakuumpumpe (11) ausgebildeten Hochvakuumpumpe und zwei weiteren gegen den Atmosphärendruck arbeitenden trocken verdichtenden Vakuumpumpen (21, 31), wobei
- diejenige der beiden trocken verdichtenden Vakuum pumpen (21, 31), welche mit dem Vorvakuumanschluß (27) der Reibungsvakuumpumpe (11) in Verbindung steht, als Membranpumpe (21) ausgebildet ist und
- im Bereich des Einlasses der Membranpumpe (21) eine Spülgaszuführungsleitung (22) mit einer Drossel (23) mündet,
- **dadurch gekennzeichnet,**
- **dass** während der Durchführung der Lecksuchmessungen über die Spülgaszuführungsleitung (22) mit der Drossel (23) ständig ein Gasstrom eingelassen wird.

12. Verfahren zum Betrieb eines Lecksuchgerätes mit einer als Reibungsvakuumpumpe (11) ausgebildeten Hochvakuumpumpe und zwei weiteren gegen den Atmosphärendruck arbeitenden trocken verdichtenden Vakuumpumpen (21, 31), wobei
- diejenige der beiden trocken verdichtenden Vakuumpumpen (21, 31), welche mit dem Vorvakuumanschluß (27) der Reibungsvakuumpumpe (11) in Verbindung steht, als Membranpumpe (21) ausgebildet ist,
- zwischen der Membranpumpe (21) und der Reibungsvakuumpumpe (11) eine Turbomolekularpumpe (19) angeordnet ist,
- die Eintrittsseiten (18, 30) der beiden Vakuumpumpen (19, 31) über eine Leitung (37) miteinander verbunden sind, die mit einem ersten Ventil (40) ausgerüstet ist,
- die zweite der beiden trocken verdichtenden Vakuumpumpen (21, 31), welche über eine Leitung (28) mit einem zweiten Ventil (29) unmittelbar mit dem Einlaß des Lecksuchgerätes (1) in Verbindung steht, als Spiralpumpe (31) ausgebildet ist und
- im Bereich des Einlasses der Spiralpumpe (31) eine Spülgaszuführungsleitung (34) mit einem dritten Ventil (35) mündet,
**dadurch gekennzeichnet,**
- **dass** über die Spülgaszuführungsleitung (34) mit dem dritten Ventil (35) nur dann Spülgas eingelassen wird, wenn mindestens das erste und zweite Ventil (29, 40) geschlossen sind.

## Claims

1. A leakage detector having a high-vacuum pump constructed as a friction vacuum pump (11) and two further vacuum pumps (21, 31) working against the atmospheric pressure, **characterised in that** both further vacuum pumps (21, 31) are dry compressing vacuum pumps.

2. A leakage detector according to Claim 1, **characterised in that** the dry compressing vacuum pumps are spiral pumps (31) and/or diaphragm pumps (21).

3. A leakage detector according to Claim 1 or 2, **characterised in that** the first of the two dry compressing vacuum pumps (21, 31), which is in communication with the backing pressure connection (27) of the friction vacuum pump (11), is constructed as a diaphragm pump (21).

4. A leakage detector according to Claim 3, **characterised in that** a turbomolecular pump (19) is located between the diaphragm pump (21) and the friction vacuum pump (11).

5. A leakage detector according to Claim 4, **characterised in that** the suction pressure of the turbomolecular pump (19) is restricted for the purpose of improving the detection sensitivity.

6. A leakage detector according to Claim 3, 4, or 5, **characterised in that** a purge-gas supply line (22) leads to the inlet region of the diaphragm pump (21).

7. A leakage detector according to Claim 6, **characterised in that** a restrictor (23) is located in the purge-gas supply line (22).

8. A leakage detector according to one of Claims 1 to 7, **characterised in that** the second of the two dry compressing vacuum pumps (21, 31), which is in direct communication with the inlet of the leakage detector (1) by way of a line (28) having the valve (29), is constructed as a spiral pump (31).

9. A leakage detector according to Claim 8, **characterised in that** a purge-gas supply line leads to the inlet region of the spiral pump (31).

10. A leakage detector according to Claim 4 and Claim 8 or 9, **characterised in that** the entry sides (18, 30) of the two vacuum pumps (19, 31) are mutually connected by way of a line (37) which is equipped with a valve (40).

11. A process for operating a leakage detector having a high-vacuum pump constructed as a friction vacuum pump (11) and two further dry compressing vacuum pumps (21, 31) working against the atmospheric pressure, in which
- that vacuum pump of the two dry compressing vacuum pumps (21, 31) which is in communication with the backing pressure connection (27) of the friction vacuum pump (11) is constructed as a diaphragm pump (21), and
- a purge-gas supply line (22) having a restrictor (23) leads to the inlet region of the diaphragm pump (21),
- **characterised in that**,
- whilst the leakage measurements are being carried out, a gas flow is admitted continuously by way of the purge-gas supply line (22) having the restrictor (23).

12. A process for operating a leakage detector having a high-vacuum pump constructed as a friction vacuum pump (11) and two further dry compressing vacuum pumps (21, 31) working against the atmospheric pressure, in which
- that vacuum pump of the two dry compressing vacuum pumps (21, 31) which is in communication with the backing pressure connection (27) of the friction vacuum pump (11) is constructed as a diaphragm pump (21),
- a turbomolecular pump (19) is arranged between the diaphragm pump (21) and the friction vacuum pump (11),
- the entry sides (18, 30) of the two vacuum pumps (19, 31) are mutually connected by way of a line (37) which is equipped with a first valve (40),
- the second of the two dry compressing vacuum pumps (21, 31), which is in direct communication with the inlet of the leakage detector (1) by way of a line (28) having a second valve (29), is constructed as a spiral pump (31), and
- a purge-gas supply line (34) having a third valve (35) leads to the inlet region of the spiral pump (31),
**characterised in that**
- purge gas is only admitted by way of the purge-gas supply line (34) having the third valve (35) when at least the first and the second valve (29, 40) are closed.

## Revendications

1. Appareil de détection de fuites comportant une pompe à vide poussé réalisée sous forme de pompe à vide à friction (11) et deux autres pompes à vide (21, 31) travaillant contre la pression atmosphérique, **caractérisé en ce que** les deux autres pompes à vide (21, 31) sont des pompes à vide compressant à sec.

2. Appareil de détection de fuites selon la revendication 1, **caractérisé en ce que** les pompes à vide compressant à sec sont des pompes spirales (31) et/ou des pompes à membrane (21).

3. Appareil de détection de fuites selon l'une ou l'autre des revendications 1 et 2, **caractérisé en ce que** la première des deux pompes à vide compressant à sec (21, 31), qui est en liaison avec le raccord à vide préliminaire (27) de la pompe à vide à friction (11), est réalisée sous forme de pompe à membrane (21).

4. Appareil de détection de fuites selon la revendication 3, **caractérisé en ce qu'**une pompe turbomoléculaire (19) se trouve entre la pompe à membrane (21) et la pompe à vide à friction (11).

5. Appareil de détection de fuites selon la revendication 4, **caractérisé en ce que** la capacité d'aspiration de la pompe turbomoléculaire (19) est étranglée pour améliorer la sensibilité de preuve.

6. Appareil de détection de fuites selon l'une des revendications 3, 4 ou 5, **caractérisé en ce qu'**une conduite d'amenée de gaz de rinçage (22) débouche dans la région de l'admission de la pompe à membrane (21).

7. Appareil de détection de fuites selon la revendication 6, **caractérisé en ce qu'**un étranglement (23) se trouve dans la conduite d'amenée de gaz de rinçage (22).

8. Appareil de détection de fuites selon l'une quelconque des revendications 1 à 7, **caractérisé en ce que** la deuxième des deux pompes à vide compressant à sec (21, 31), laquelle est en liaison via une conduite (23) avec la soupape (24) directement avec l'admission de l'appareil de détection de fuites (1), est réalisée sous forme de pompe spirale (31).

9. Appareil de détection de fuites selon la revendication 8, **caractérisé en ce qu'**une conduite d'amenée de gaz de rinçage débouche dans la région de l'admission de la pompe spirale (31).

10. Appareil de détection de fuites selon la revendication 4 et la revendication 8 ou 9, **caractérisé en ce que** les côtés d'admission (18, 30) des deux pompes à vide (19, 31) sont reliés l'un à l'autre par une conduite (37) qui est équipée d'une soupape (40).

11. Procédé de fonctionnement d'un appareil de détection de fuites avec une pompe à vide poussé réalisée sous forme de pompe à vide à friction (11) et avec deux autres pompes à vide (21, 31) compressant à sec, travaillant contre la pression atmosphérique, dans lequel:
- celle des deux pompes à vide (21, 31) compressant à vide qui est en liaison avec le raccord à vide préliminaire (27) de la pompe à vide à friction (11) est réalisée sous forme de pompe à membrane (21), et
- une conduite d'amenée de gaz de rinçage (22) avec un étranglement (23) débouche dans la région de l'admission de la pompe à membrane (21),
**caractérisé en ce que**:
- un courant de gaz est admis en permanence pendant l'exécution des mesures de détection de fuites via la conduite d'amenée de gaz de rinçage (22) avec l'étranglement (23).

12. Procédé de fonctionnement d'un appareil de détection de fuites avec une pompe à vide poussée réalisée sous forme de pompe à vide à friction (11) et avec deux autres pompes à vide (21, 31) compressant à sec, travaillant contre la pression atmosphérique, dans lequel :
- celle des deux pompes à vide (21, 31) compressant à vide qui est en liaison avec le raccord à vide préliminaire (27) de la pompe à vide à friction (11) est réalisée sous forme de pompe à membrane (21),
- une pompe turbomoléculaire (19) est agencée entre la pompe à membrane (21) et la pompe à vide à friction (11),
- les côtés d'admission (18, 30) des deux pompes à vide (19, 31) sont reliés l'un à l'autre par une conduite (37) qui est équipée d'une première soupape (40),
- la deuxième des deux pompes à vide (21, 31) compressant à sec, qui est en liaison par une conduite (28) avec une deuxième soupape (29) directement avec l'admission de l'appareil de détection de fuites (1), est réalisée sous forme de pompe spirale (31), et
- une conduite d'amenée de gaz de rinçage (34) débouche avec une troisième soupape (35) dans la région de l'admission de la pompe spirale (31),
**caractérisé en ce que**
- du gaz de rinçage n'est admis via la conduite d'amenée de gaz de rinçage (34) avec la troisième soupape (35) que lorsqu'au moins les première et deuxième soupapes (29, 40) sont fermées.
